# EUROPÄISCHE PATENTSCHRIFT

(11) **EP 3 837 499 B1**
(45) Veröffentlichungstag und Bekanntmachung des Hinweises auf die Patenterteilung: **20.04.2022**
(21) Anmeldenummer: 19798237.4
(22) Anmeldetag: 31.10.2019
(51) Int. Cl.: G01D 21/00

(54) **MESSGERÄT ZUR PROZESSAUTOMATISIERUNG IM INDUSTRIELLEN UMFELD**
MEASURING DEVICE FOR PROCESS AUTOMATION IN THE INDUSTRIAL ENVIRONMENT
DISPOSITIF DE MESURE POUR L'AUTOMATISATION DE PROCESSUS DANS L'ENVIRONNEMENT INDUSTRIEL

(43) Veröffentlichungstag der Anmeldung: 23.06.2021
(73) Patentinhaber: VEGA Grieshaber KG, 77709 Wolfach (DE)
(72) Erfinder: HOFERER, Christian, 77652 Offenburg (DE); KAUFMANN, Manuel, 77791 Berghaupten (DE)
(74) Vertreter: Maiwald Patent- und Rechtsanwaltsgesellschaft mbH
(86) Internationale Anmeldenummer: PCT/EP2019/079891
(87) Internationale Veröffentlichungsnummer: WO 2021/083528

(56) Entgegenhaltungen:
- CN-A- 110 031 037
- CN-U- 208 969 244
- US-A1- 2019 272 496

## Beschreibung

### Gebiet der Erfindung

Die Erfindung betrifft die Prozessautomatisierung im industriellen Umfeld. Insbesondere betrifft die Erfindung ein Messgerät zur Prozessautomatisierung im industriellen Umfeld, mehrere Verwendungen eines derartigen Messgeräts, ein Verfahren zur Positionsbestimmung eines Messgeräts, ein Programmelement und ein computerlesbares Medium.

### Hintergrund

Messgeräte zur Prozessautomatisierung im industriellen Umfeld können dazu eingesetzt werden, physikalische Messgrößen von einem Medium in einem Behälter oder Tank zu erfassen. Die Behälter und Tanks haben im Regelfall einen fest zugewiesenen Standort. Es existieren jedoch Anwendungsfälle, bei denen sich der Standort eines Behälters ändern kann. Ein Beispiel hierfür sind sogenannte IBCs, die bestimmungsgemäß bereits auf einer Palette montiert und so für einen variablen Einsatz gerüstet sind. So können an einem Lagerplatz mehrere solche Behälter vorgehalten werden, um diese bei Bedarf an eine Entnahmestelle zu befördern. Der dort bereits entleerte Tank kann gegen einen Tank aus dem Lager ausgetauscht werden. Für einen Anwender, der stets über den aktuellen Ort und die Menge seiner Vorräte informiert werden möchte, bieten sich Füllstandmesseinrichtungen an, die sowohl den Füllstand als auch den Ort der einzelnen Tanks via Funk an eine Zentrale übermitteln können. Zur Energieversorgung solcher Messgeräte ist eine Batterie oder ein anderweitiger Energiespeicher im Messgerät vorgesehen.

US 2019/0272496 A1 beschreibt ein System zum Verwalten eines Lebenszyklus von Containern, die sich entfernt von einem Server befinden.

CN 208 969 244 U beschreibt eine Positionierungsvorrichtung mit geringem Stromverbrauch, die ein Positionierungsmodul, ein Verschiebungserfassungsmodul und ein Batterieverwaltungsmodul umfasst.

CN 110 031 037 A beschreibt ein Verwaltungssystem für Flughafentransportgeräte, das auf dem Internet der Dinge basiert und mehrere Ortungsgeräte sowie eine Plattform für das Internet der Dinge umfasst.

### Zusammenfassung

Es ist eine Aufgabe der vorliegenden Erfindung, ein Messgerät zur Prozessautomatisierung im industriellen Umfeld anzugeben, welches über einen langen Zeitraum zuverlässig Messdaten liefert.

Diese Aufgabe wird durch die Merkmale der unabhängigen Patentansprüche gelöst. Weiterbildungen der Erfindung ergeben sich aus den Unteransprüchen und der folgenden Beschreibung von Ausführungsformen.

Ein erster Aspekt betrifft ein Messgerät zur Prozessautomatisierung im industriellen Umfeld. Das Messgerät weist eine erste Sensoreinrichtung auf, die eingerichtet ist zum Erfassen einer Prozessgröße, beispielsweise eines Füllstands, eines Grenzstands, eines Drucks, eines Durchflusses, der Topologie einer Füllgutoberfläche oder des Volumens eines Füll- oder Schüttguts.

Das Messgerät weist eine Positionserfassungseinrichtung auf, die eingerichtet ist zum Erfassen der Position des Messgeräts. Beispiele hierfür sind GPS-Positionserfassungseinrichtungen oder solche, die Galileo, GLONASS, Beidou, Mobilfunksignale, Bluetooth oder sogenannte "Indoor-Positionsbestimmung" nutzen.

Es ist eine zweite Sensoreinrichtung vorgesehen, die eingerichtet ist zum Erfassen von Umweltdaten. Bei diesen Umweltdaten kann es sich beispielsweise um Beschleunigungsdaten, Positionsdaten (zum Beispiel über Mobilfunksignale), Kompassdaten und/oder Schaltdaten (Detektion eines Knopfdrucks oder Annäherung eines Fingers) handeln.

Das Messgerät weist eine Steuereinrichtung auf, eingerichtet zum Analysieren der Umweltdaten und zum Ermitteln, ob, basierend auf dieser Analyse, durch die Positionserfassungseinrichtung eine aktuelle Position des Messgeräts erfasst werden soll oder nicht. Die Steuereinrichtung ist weiterhin eingerichtet, die Positionserfassungseinrichtung anzuweisen, die aktuelle Position des Messgeräts zu erfassen, wenn die Analyse der Umweltdaten ergeben hat, dass die aktuelle Position erfasst werden soll.

Hierdurch kann Energie eingespart werden, da die Positionserfassungseinrichtung nur dann zu einer aktuellen Positionserfassung eingesetzt wird, wenn diese auch benötigt wird, beispielsweise weil sich die Position des Messgeräts durch Bewegung des Behälters geändert hat.

Die Begriffe "erste Sensoreinrichtung", "zweite Sensoreinrichtung", "Positionserfassungseinrichtung" und "Steuereinrichtung" sind breit auszulegen. Maßgeblich ist, dass diese einzelnen Einrichtungen eingerichtet sind, die vorgesehenen Maßnahmen durchzuführen, unabhängig davon, ob es sich bei ihnen um zusammenhängende Einheiten handelt oder um an verschiedenen Stellen des Messgeräts angeordnete Teileinheiten.

Unter dem Begriff "Prozessautomatisierung im industriellen Umfeld" kann ein Teilgebiet der Technik verstanden werden, welches alle Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation. Mit Hilfe von Distanz- und Winkelsensoren werden im Bereich der Logistikautomation Abläufe innerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Ein Aspekt der vorliegenden Offenbarung betrifft demnach eine autarke Füllstandmesseinrichtung zur Messung eines Füllstandes in einem Behälter, wobei die Füllstandmesseinrichtung umfasst:
- Eine Füllstandmesseinheit (erste Sensoreinrichtung), eingerichtet zur Messung eines Füllstandes eines Behälters, Tanks oder dergleichen;
- Zumindest eine Sende-/Empfangseinheit (z.B. LoRaWan), eingerichtet zur Kommunikation mit einer Datenverarbeitungseinheit;
- Ein Modul zur Positionsbestimmung (z.B. GPS/Galileo/Glonass/Beidou/Beacon) (Positionserfassungseinrichtung);
- Einen Sensor zur Erkennung von Umweltdaten (zweite Sensoreinrichtung);
- Eine Auswertelogik (Steuereinrichtung), die basierend auf den Umweltdaten ermittelt, ob ein Positionsupdate angestoßen werden soll;
- Ein Energiespeicher (Kondensator/Batterie) zur Versorgung der Komponenten.

Gemäß einer Ausführungsform ist die Positionserfassungseinrichtung eingerichtet, die aktuelle Position des Messgeräts nur dann zu erfassen, wenn die Analyse der Umweltdaten ergeben hat, dass die aktuelle Position erfasst werden soll. Andernfalls wird die aktuelle Position des Messgeräts nicht erfasst.

Gemäß einer weiteren Ausführungsform weist das Messgerät einen Datenspeicher auf, der eingerichtet ist zum Speichern der aktuellen Position des Messgeräts. Zu einem späteren Zeitpunkt kann dann die gemessene, aktuelle Position des Messgeräts, gegebenenfalls zusammen mit den mit der Erfassung der Prozessgröße zusammenhängenden Messdaten an eine externe Einrichtung übertragen werden, typischerweise mittels einer Funkübertragung. Die Übertragung kann aber auch drahtgebunden ausgeführt sein, beispielsweise über eine 4 bis 20 mA Zweidrahtleitung.

Gemäß einer Ausführungsform handelt es sich bei dem Messgerät jedoch um ein autark arbeitendes Messgerät mit einer ausschließlich internen Energieversorgung in Form einer Batterie oder eines oder mehrerer anderer Energiespeicher.

Die Steuereinrichtung ist eingerichtet, die Positionserfassungseinrichtung nur dann anzuweisen, die aktuelle Position des Messgeräts zu erfassen, wenn die Analyse der Umweltdaten ergeben hat, dass das Messgerät bewegt wurde. Insbesondere ist vorgesehen, dass die aktuelle Position des Messgeräts nur dann erfasst wird, wenn die Analyse der Umweltdaten ergeben hat, dass das Messgerät bewegt wurde und nun tatsächlich auch stillsteht. Hierdurch kann die Anzahl an Positionsmessungen weiter reduziert werden.

Gemäß einer weiteren Ausführungsform ist die Steuereinrichtung eingerichtet, aus der Analyse der Umweltdaten ein Bewegungsmuster des Messgeräts zu erkennen. Hierfür kann künstliche Intelligenz eingesetzt werden. Beispielsweise kann die Steuereinrichtung eingerichtet sein, zu erkennen, dass das Messgerät zusammen mit dem Behälter bewegt wurde und dann abgesetzt wurde. Daraufhin kann die Positionsbestimmung getriggert werden.

Gemäß einer weiteren Ausführungsform weist das Messgerät einen Energiespeicher auf. Auch kann es einen Schalter aufweisen, der zum Schließen der Verbindung zwischen dem Energiespeicher und der durch den Energiespeicher mit Energie zu versorgenden Positionserfassungseinrichtung eingerichtet ist. Wird der Schalter geschlossen, erfolgt die Positionsbestimmung durch die Positionserfassungseinrichtung.

Gemäß einer weiteren Ausführungsform weist die zweite Sensoreinrichtung einen Beschleunigungssensor, eine Positionsbestimmungseinrichtung mittels Mobilfunksignalen, einen Kompass und/oder einen Strommesser auf.

Ein weiterer Aspekt betrifft die Verwendung eines oben und im Folgenden beschriebenen Messgeräts zur Füllstandmessung. Ein weiterer Aspekt betrifft die Verwendung eines oben und im Folgenden beschriebenen Messgeräts zur Druckmessung. Ein weiterer Aspekt betrifft die Verwendung eines oben und im Folgenden beschriebenen Messgeräts zur Durchflussmessung. Ein weiterer Aspekt betrifft die Verwendung eines oben und im Folgenden beschriebenen Messgeräts zur Messung einer Prozessgröße, beispielsweise eines Füllstands, der Topologie einer Füllgutoberfläche oder der Menge eines Füllguts in einem mobilen Behälter.

Ein weiterer Aspekt betrifft ein Verfahren zur Positionsbestimmung eines Messgeräts, bei dem eine Prozessgröße erfasst wird, Umweltdaten des Messgeräts erfasst werden, diese Umweltdaten analysiert werden und ermittelt wird, ob, basierend auf der Analyse, eine aktuelle Position des Messgeräts erfasst werden soll oder nicht. Nach dieser Analyse erfolgt ein Erfassen der aktuellen Position des Messgeräts, wenn die Analyse der Umweltdaten ergeben hat, dass die aktuelle Position erfasst werden soll. Andernfalls nicht.

Ein weiterer Aspekt betrifft ein Programmelement, das, wenn es auf einer Steuereinrichtung eines Messgeräts ausgeführt wird, das Messgerät anleitet, die oben und im Folgenden beschriebenen Verfahrensschritte durchzuführen.

Ein weiterer Aspekt betrifft ein computerlesbares Medium, auf dem ein oben beschriebenes Programmelement gespeichert ist.

Das Computerprogramm kann beispielsweise in einem Arbeitsspeicher einer Datenverarbeitungseinrichtung, wie etwa eines Datenprozessors geladen und/oder gespeichert sein, wobei die Datenverarbeitungseinrichtung auch Teil einer Ausführungsform der vorliegenden Erfindung sein kann. Diese Datenverarbeitungseinrichtung kann dazu eingerichtet sein, Verfahrensschritte des oben beschriebenen Verfahrens durchzuführen. Die Datenverarbeitungseinrichtung kann ferner dazu eingerichtet sein, das Computerprogramm bzw. das Verfahren automatisch auszuführen und/oder Eingaben eines Benutzers auszuführen. Das Computerprogramm kann auch über ein Datennetzwerk, wie etwa das Internet, bereitgestellt und von einem solchen Datennetzwerk aus in den Arbeitsspeicher der Datenverarbeitungseinrichtung heruntergeladen werden. Das Computerprogramm kann auch eine Aktualisierung eines bereits vorhandenen Computerprogramms umfassen, wodurch das vorhandene Computerprogramm beispielsweise zum Ausführen des oben beschriebenen Verfahrens befähigt werden kann.

Das computerlesbare Speichermedium kann insbesondere, aber nicht notwendigerweise, ein nichtflüchtiges Medium sein, das sich insbesondere zum Speichern und/oder Verteilen eines Computerprogramms eignet. Das computerlesbare Speichermedium kann eine CD-ROM, eine DVD-ROM, ein optisches Speichermedium, ein Festkörpermedium oder ähnliches sein, das zusammen mit oder als Teil anderer Hardware geliefert wird. Zusätzlich oder alternativ dazu, kann das computerlesbare Speichermedium auch in anderer Form verteilt bzw. vertrieben werden, beispielsweise über ein Datennetzwerk, wie etwa das Internet oder andere drahtgebundene oder drahtlose Telekommunikationssysteme. Hierzu kann das computerlesbare Speichermedium beispielsweise als ein oder mehrere Datenpakete ausgeführt sein.

Im Folgenden werden mit Verweis auf die Figuren Ausführungsformen beschrieben. Die Darstellung in den Figuren ist nicht maßstäblich. Werden in der folgenden Figurenbeschreibung die gleichen Bezugszeichen verwendet, so bezeichnen diese gleiche oder ähnliche Elemente.

### Kurze Beschreibung der Figuren

Fig. 1 zeigt einen Behälter mit einem darin angeordneten Messgerät.
Fig. 2 zeigt den Aufbau eines Messgeräts gemäß einer Ausführungsform.
Fig. 3 zeigt ein Flussdiagramm eines Verfahrens gemäß einer Ausführungsform.
Fig. 4 zeigt ein Flussdiagramm eines Verfahrens gemäß einer weiteren Ausführungsform.
Fig. 5 zeigt den Aufbau eines Messgeräts gemäß einer weiteren Ausführungsform.

### Detaillierte Beschreibung von Ausführungsformen

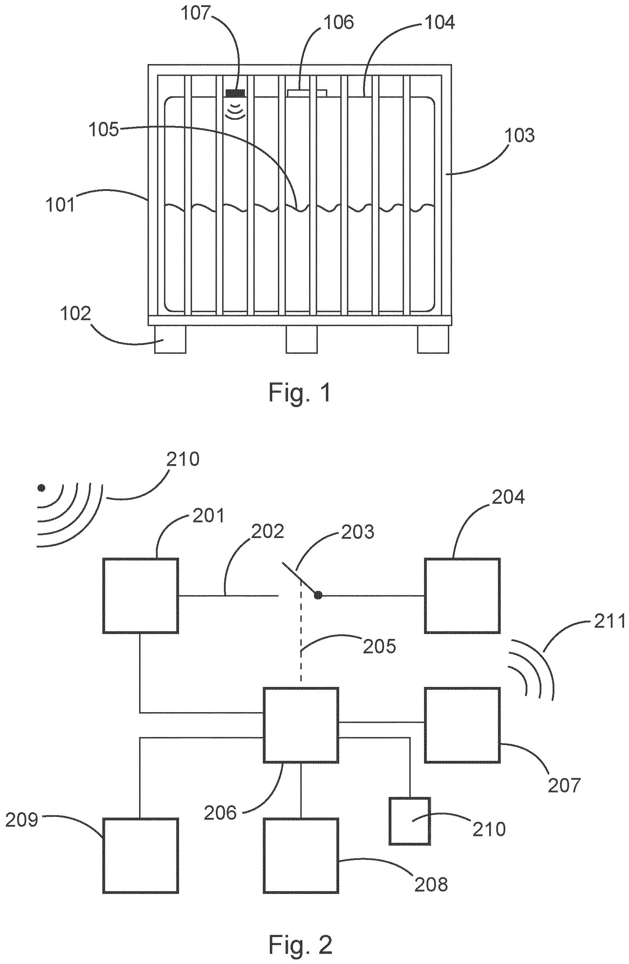

Figur 1 zeigt ein Beispiel eines sogenannten IBCs 101, der zum Transport von Medien eingesetzt wird. Diese gewichts-, volumen- und kostenoptimierte Bauweise ist insbesondere in der Distributions- und Logistikbranche sehr beliebt, und ermöglicht die einfache Versorgung von Kunden mit den unterschiedlichsten Medien. Der IBC 101 besteht üblicherweise aus einer Palette 102, einem Metallrahmen 103 sowie einer typischer Weise aus Kunststoff gefertigten Behälterblase 104, die das Füllgut 105 beinhaltet. Über einen Deckel 106 kann das Medium 105 in den Behälter 101 bzw. in die Behälterblase 104 eingebracht werden.

Das Messgerät 107 kann beispielsweise eine Füllstandsmesseinrichtung sein, die typischerweise an einer oberen Oberfläche der Behälterblase 104 angebracht wird, und deren erste Sensoreinrichtung beispielsweise unter Verwendung elektromagnetischer Wellen den Abstand zur Füllgutoberfläche 105 misst. Das Messgerät 107 kann dann das Messergebnis nach außen hin bereitstellen.

Zudem weist das Messgerät 107 ein Kommunikationsmodul für drahtlose Kommunikation auf (z.B. Narrowband IoT, LPWA (Low Power Wide Area) Kommunikation, Lora, Sigfox, MIOTY, LoRaWAN, Bluetooth). Weiterhin umfasst das Messgerät 107 ein Modul zur Positionsbestimmung (Positionserfassungseinrichtung) und einen weiteren Sensor (zweite Sensoreinrichtung), dessen Daten verwendet werden, um zu entscheiden, ob eine Positionsbestimmung durchgeführt werden soll. Nur wenn eine Auswertelogik (Steuereinrichtung) erkennt, dass ein Positionsupdate nötig ist, wird das Modul zur Positionsbestimmung mit ausreichend Energie versorgt. Ziel ist es, den Energieverbrauch der Positionsbestimmung zu reduzieren.

Ein Aspekt ist das Zusammenspiel zwischen der Steuereinrichtung, des Moduls zur Positionsbestimmung und der zweiten Sensoreinrichtung zur Erkennung, ob ein Positionsupdate nötig ist. Das Modul zur Positionsbestimmung (GPS/Galileo/Glonass/Beidou/Handy-Netz/Bluetooth/Indoor Positionsbestimmung) benötigt während des Betriebs viel Energie und sollte daher nur sehr kurz aktiviert sein. Der Sensor zur Erkennung, ob ein Positionsupdate nötig oder sinnvoll ist, kann z.B. ein Beschleunigungssensor oder ein einfacher Taster sein. Der Energieverbrauch dieses Sensors ist deutlich geringer als der Energieverbrauch des Moduls zur Positionsbestimmung. Die Erfindung reduziert folglich den Gesamtenergieverbrauch des Messgeräts.

Die Energieversorgung solcher Messgeräte erfolgt meist nicht drahtgebunden, da andernfalls die Flexibilität stark beeinträchtig werden würde. Daher sind autarke Lösungen mittels Energiespeicher nötig, die die Energieversorgung des Messgeräts sicherstellen. D.h. alle Komponenten des Messgeräts werden von mindestens einem Energiespeicher versorgt. Auch ist eine Form von Energy-Harvesting, bei der z.B. mittels Photovoltaik der Energiespeicher wieder aufgefüllt wird, möglich. Dennoch ist die Forderung, dass jede einzelne Komponente des Messgeräts möglichst keine unnötige Energie verbraucht, von äußerster Relevanz. Insbesondere energieintensive Vorgänge, wie die Positionsbestimmung, sind daher auf ein Minimum zu reduzieren.

Aus obigem Anwendungsfall, der beschreibt, dass ein Tank zuerst auf einem Lagerplatz verharrt und nach einer gewissen Zeit an eine Entnahmestelle transportiert wird, wird schnell ersichtlich, dass die Positionsbestimmung des Messgeräts nur an genau zwei Orten erforderlich ist. Das erste Mal ist ein Positionsupdate der in dem Messgerät persistent gespeicherten Positionsdaten nötig, wenn der Tank mit dem Messgerät seinen festen Lagerplatz im Lager erreicht hat. Danach ändert sich die Position für eine längere Zeitdauer nicht mehr und die Positionsbestimmung kann energiesparend deaktiviert werden.

Möglich ist eine vollständige Trennung der Energieversorgung mittels einer Schaltung, eines Schalters oder Transistors oder auch eine Lösung, bei der das Modul zur Positionsbestimmung in einen energiesparenden Zustand versetzt wird. Das Messgerät ist so eingerichtet, dass es nach einer gewissen Zeitdauer eine Messwerterfassung, beispielsweise eine Füllstandmessung, veranlasst und den Messwert (Füllstand) mit den zuletzt gespeicherten Positionsdaten über ein Funkmodul einem Anwender bekannt macht. Dieser Vorgang kann sequenziell wiederholt werden. Die Füllstandmesseinrichtung liefert solange korrekte Positionsdaten bis der Tank wieder bewegt wird. In der Zwischenzeit kann das Modul zur Positionsbestimmung deaktiviert bleiben. Ein Update der Position ist nicht erforderlich, da sowohl Tank als auch Füllstandmesseinrichtung ortsfest verharren. Erst wenn der Tank im aufgezeigten Beispiel die Entnahmestelle erreicht hat, ist ein Positionsupdate sinnvoll. Die Steuereinrichtung erkennt mittels der Sensordaten (Umweltdaten) der zweiten Sensoreinrichtung, ob ein Positionsupdate nötig ist, stellt die Energieversorgung zum Modul zur Positionsbestimmung sicher und aktualisiert die vorhandenen Positionsdaten. Anschließend kann eine neue Messung veranlasst werden und die aktualisierten Positionsdaten mit dem Füllstand des Tanks über ein Funkmodul gesendet werden.

Ob während des Transports des Tank eine Positionsbestimmung erforderlich ist und ob dann das Messgerät seine Positionsdaten beim Senden über ein Funkmodul laufend aktualisiert, kann ggf. vom Anwender selbst festgelegt und dem Messgerät über eine Parametrierschnittstelle oder Parameterschnittstelle mitgeteilt werden. Gemäß einer weiteren Ausführungsform wird zudem die Übertragung der Positionsdaten während einer Bewegung des Behälters eingestellt. Alternativ kann es vorgesehen sein, dass anstelle der Positionsdaten ein Status, der signalisiert, dass das Messgerät und der Tank bewegt werden, über das Funkmodul gesendet wird.

Für die zweite Sensoreinrichtung, die Umweltdaten erfasst, die dann ausgewertet werden, um zu entscheiden, ob ein Positionsupdate durchgeführt werden muss, sind verschiedene Ausprägungen möglich, die einzeln oder als Kombination ihre praktische Anwendung finden:
Taster/Schalter:
   Im einfachsten Fall wird die zweite Sensoreinrichtung durch einen Taster oder Schalter repräsentiert. Die Umweltdaten sind dann der Druck auf den Taster, das Schließen eines Kontakts durch einen Finger oder ein Hilfsmittel, oder eine Kapazitätsänderung bei einem kapazitiven Taster. Die Betätigung des Tasters/Schalters muss manuell erfolgen, sobald der Tank mit dem Messgerät den Bestimmungsort erreicht hat.
Beschleunigungssensor:
   Ein Beschleunigungssensor erkennt, dass der Tank mit dem Messgerät bewegt wird. Der Beschleunigungssensor weist einen sehr geringen Energieverbrauch auf. Zudem besteht die Möglichkeit, den Beschleunigungssensor mit einem neuronalen Netz oder anderweitigen künstlichen Intelligenz zu versehen, um nur auf Gewisse Bewegungsmuster zu reagieren. Eine gleichförmige Bewegung, die eine Positionsänderung nach sich zieht, lässt sich somit von einer nicht relevanten Vibration unterscheiden.
   Möglich sind auch einfache Formen an Sensoren, die eine Bewegung erkennen, indem z.B. ein feines Metallplättchen einen Kontakt schließt.
   Von Vorteil ist es, das Positionsupdate erst durchzuführen, wenn erkannt wurde, dass der Tank seinen Bestimmungsort erreicht hat. So kann z.B. nach einer Beschleunigung während einer Wartezeit beobachtet werden, ob nicht eine weitere Beschleunigung folgt. Erst wenn sichergestellt wird, dass der Tank einen festen Ort erreicht hat, kann dann das Positionsupdate durchgeführt werden. Auch hier ist die Erkennung von Bewegungsmustern hilfreich. So kann erkannt werden, ob der Tank erst bewegt und dann abgesetzt wird.
Funkzellenerkennung:
   Ein Sensor bzw. ein Kommunikationsmodul, das die aktuelle Funkzelle eines Mobilfunknetzes erkennt bzw. die Empfangsstärker verschiedener Masten und bei Änderung der Empfangscharakteristik auf eine Positionsänderung schließt, die dann über das Modul zur Positionsbestimmung verifiziert wird.
Zeitschaltuhr:
   Eine Zeitschaltuhr, die zyklisch ein Positionsupdate veranlasst.
Kompass:
   Ein Kompass, dessen Ausrichtung kontinuierlich erfasst wird und bei einer Veränderung ein Positionsupdate durchführt.
Strommesser bei Energy-Harvesting:
   Verfügt das Messgerät über Vorrichtungen für Energy-Harvesting, so kann über einen Sensor ausgewertet werden, ob aktuell überschüssige oder zumindest ausreichend Energie zur Verfügung, um ein Positionsupdate durchzuführen.

Figur 2 zeigt die Funktion eines Messgeräts gemäß einer Ausführungsform. Ein Positionsmodul (Positionserfassungseinrichtung) 201 zum Empfangen von Positionsdaten 210 wird über eine Leitung 202 mit Energie aus einem Energiespeicher 204 (Batterie, Kondensator) versorgt. Die Leitung 202 beinhaltet eine Schaltvorrichtung 203 (mechanischer Schalter, Transistor, Schaltung), mit der das Positionsmodul 201 von der Energieversorgung getrennt oder mit Energie versorgt werden kann. Die Schaltvorrichtung 203 lässt sich über eine Steuerleitung 205 mit einer Steuereirichtung 206 (Mikrokontroller, Logik-Schaltung) beeinflussen. Die Steuereirichtung 206 bzw. der Mikrokontroller 206 kann weitere Funktionen übernehmen. Verknüpfungen zum Positionsmodul 201, zu einem Funkmodul 207 und einem Sensor zur Erfassung von Füllständen 209 sind in der Figur eingezeichnet. Über die Verknüpfungen lassen sich analoge oder digitale Signale/Daten austauschen. An die Steuereirichtung 206 selbst ist ein weiterer Sensor 208 angeschlossen, mit dessen Daten entschieden werden kann, ob ein Positionsupdate erforderlich ist, sowie eine Datenspeichereinrichtung 210 zur Speicherung der Positionsdaten und der Messdaten.

So kann z.B. die Steuereirichtung 206 zuerst einen Füllstand über den Füllstandsensor 209 erfassen, danach durch Auswertung der Daten des Sensors 208 entscheiden, ob das Positionsmodul 201 mit Energie versorgt werden soll, um ein Positionsupdate vom Positionsmodul 201 zu erfragen. Anschließend werden alle zusammengetragenen Informationen über ein Funkmodul 207 veröffentlicht. Der Datenbroadcast 211 kann anschließend von einem Anwender empfangen und ausgewertet werden.

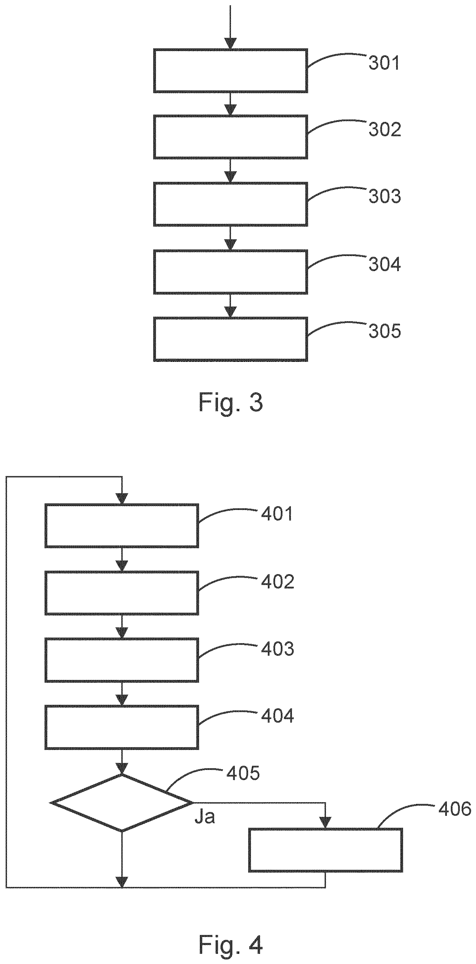

Figur 3 zeigt die einzelnen Schritten eines Positionsupdates. In Schritt 301 wird das Modul zur Positionsbestimmung mit Energie versorgt. In Schritt 302 wird gewartet, bis die Positionsbestimmung abgeschlossen ist. In Schritt 303 werden die Positionsdaten vom Modul zur Positionsbestimmung zur Steuereinrichtung übertragen. In Schritt 304 speichert die Steuereinrichtung die Positionsdaten persistent. In Schritt 305 wird die Energieversorgung zum Modul zur Positionsbestimmung getrennt bzw. das Modul selbst in einen Ruhezustand versetzt.

Figur 4 zeigt den wesentlichen Programmablauf einer Füllstandmesseinrichtung. In Schritt 401 wird eine Füllstandmessung durchgeführt. In Schritt 402 wird der Messwert des Füllstands via Funkmodul übertragen. In Schritt 403 werden die gespeicherten Positionsdaten des letzten Positionsupdates via Funkmodul übertragen. In Schritt 404 werden Sensordaten erfasst und ausgewertet (Umweltdaten). In Schritt 405 wird geprüft, ob ein Positionsupdate (Figur 3) nötig ist. In Schritt 406 wird dann das Positionsupdate durchgeführt.

Anzumerken ist, dass ein sequentieller Programmablauf wie in Figur 4 nur ein Beispiel darstellt. Es ist auch möglich, dass der Sensor 208 ein Interrupt auslöst, der dann nebenläufig dazu führt, dass das Positionsupdate ausgeführt wird. Auch ist es möglich, dass der, ggf. extern angeordnete Sensor zur Gewinnung von Umweltdaten eine eigene Auswertelogik (z.B. ein künstliches neuronales Netz) besitzt, die dann über eine einzelne Steuerleitung, der Haupt-Auswertelogik über eine Steuerleitung mitteilt, dass ein Positionsupdate erforderlich ist.

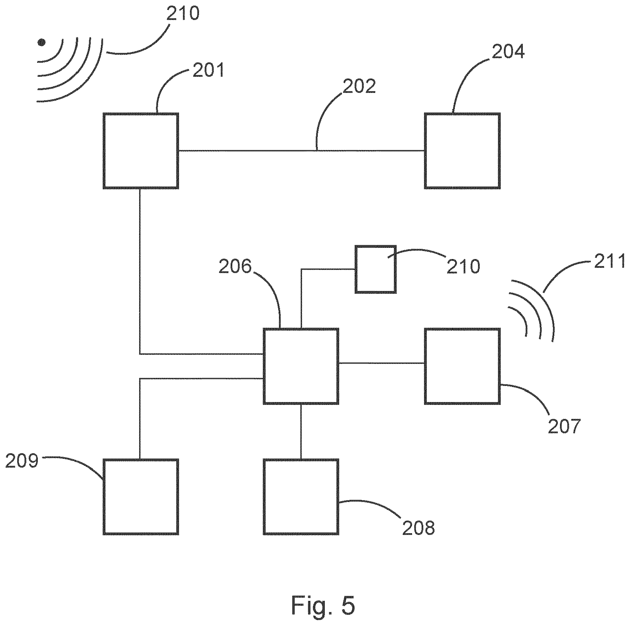

Figur 5 zeigt eine Abwandlung von Figur 2. Es fehlen jedoch die Schaltvorrichtung 203 und die Steuerleitung 205. Die Figur zeigt auf, dass es auch Module zur Positionsbestimmung gibt, die in einen energiesparenden Zustand versetzt werden können oder sogar intern stromlos geschalten werden können.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Messgerät (107) zur Prozessautomatisierung im industriellen Umfeld, aufweisend:
eine erste Sensoreinrichtung (209), eingerichtet zum Erfassen einer Prozessgröße;
eine Positionserfassungseinrichtung (201), eingerichtet zum Erfassen der Position des Messgeräts;
eine zweite Sensoreinrichtung (208), eingerichtet zum Erfassen von Umweltdaten;
eine Steuereinrichtung (206), eingerichtet zum Analysieren der Umweltdaten, und zum Ermitteln, ob, basierend auf der Analyse, eine aktuelle Position des Messgeräts erfasst werden soll oder nicht;
wobei die Steuereinrichtung weiterhin eingerichtet ist, die Positionserfassungseinrichtung anzuweisen, die aktuelle Position des Messgeräts zu erfassen, wenn die Analyse der Umweltdaten ergeben hat, dass die aktuelle Position erfasst werden soll;
**dadurch gekennzeichnet, dass** die Steuereinrichtung (206) eingerichtet ist, die Positionserfassungseinrichtung (201) nur dann anzuweisen, die aktuelle Position des Messgeräts zu erfassen, wenn die Analyse der Umweltdaten ergeben hat, dass das Messgerät bewegt wurde und nun still steht.

2. Messgerät (107) nach Anspruch 1,
wobei die Positionserfassungseinrichtung (201) eingerichtet ist, die aktuelle Position des Messgeräts nur dann zu erfassen, wenn die Analyse der Umweltdaten ergeben hat, dass die aktuelle Position erfasst werden soll. CGS:NT

3. Messgerät (107) nach einem der vorhergehenden Ansprüche, weiter aufweisend einen Datenspeicher (210), eingerichtet zum Speichern der aktuellen Position des Messgeräts.

4. Messgerät (107) nach einem der vorhergehenden Ansprüche,
wobei die Steuereinrichtung (206) eingerichtet ist, aus der Analyse der Umweltdaten ein Bewegungsmuster des Messgeräts zu erkennen.

5. Messgerät (107) nach einem der vorhergehenden Ansprüche, weiter aufweisend:
einen Energiespeicher (204),
einen Schalter (203), der zum Schließen einer Verbindung zwischen dem Energiespeicher und der Positionserfassungseinrichtung (201) eingerichtet ist.

6. Messgerät (107) nach einem der vorhergehenden Ansprüche,
wobei die zweite Sensoreinrichtung (208) einen Beschleunigungssensor, eine Positionsbestimmungseinrichtung mittels Mobilfunksignalen, einen Kompass und/oder einen Strommesser aufweist.

7. Verwendung eines Messgeräts (107) nach einem der Ansprüche 1 bis 6 zur Füllstandmessung.

8. Verwendung eines Messgeräts (107) nach einem der Ansprüche 1 bis 6 zur Druckmessung.

9. Verwendung eines Messgeräts (107) nach einem der Ansprüche 1 bis 6 zur Durchflussmessung.

10. Verwendung eines Messgeräts (107) nach einem der Ansprüche 1 bis 6 zur Messung einer Prozessgröße in einem mobilen Behälter.

11. Verfahren zur Positionsbestimmung eines Messgeräts, aufweisend die Schritte:
Erfassen einer Prozessgröße;
Erfassen von Umweltdaten des Messgeräts;
Analysieren der Umweltdaten;
Ermitteln, ob, basierend auf der Analyse, eine aktuelle Position des Messgeräts erfasst werden soll oder nicht;
Erfassen der aktuellen Position des Messgeräts, wenn die Analyse der Umweltdaten ergeben hat, dass die aktuelle Position erfasst werden soll;
**dadurch gekennzeichnet, dass**
die aktuelle Position des Messgeräts nur dann erfasst wird, wenn die Analyse der Umweltdaten ergeben hat, dass das Messgerät bewegt wurde und nun stillsteht.

12. Programmelement, das, wenn es auf einer Steuereinrichtung (206) eines Messgeräts (107) ausgeführt wird, das Messgerät anleitet, die Schritte nach Anspruch 11 durchzuführen.

13. Computerlesbares Medium, auf dem ein Programmelement nach Anspruch 12 gespeichert ist.

## Claims

1. Measuring device (107) for process automation in an industrial environment, comprising:
a first sensor device (209), arranged to sense a process variable;
a position detecting device (201), arranged to detect the position of the measuring device;
second sensor device (208) arranged to capture environmental data;
control device (206) arranged to analyze the environmental data,
and to determine whether or not, based on the analysis, a current position of the measuring device should be detected;
wherein the control device is further adapted to instruct the position detecting device to detect the current position of the measuring device if the analysis of the environmental data has determined that the current position should be detected;
**characterized in that** the control device (206) is arranged to instruct the position detecting device (201) to detect the current position of the measuring device only when the analysis of the environmental data has determined that the measuring device has been moved and is now stationary.

2. Measuring apparatus (107) according to claim 1,
wherein the position detecting device (201) is arranged to detect the current position of the measuring device only when the analysis of the environmental data has indicated that the current position should be detected.

3. Measuring device (107) according to any one of the preceding claims, further comprising a data memory (210) arranged to store the current position of the measuring device.

4. Measuring device (107) according to any one of the preceding claims,
wherein the control device (206) is arranged to detect a movement pattern of the measuring device from the analysis of the environmental data.

5. A measuring device (107) according to any one of the preceding claims, further comprising:
an energy storage device (204),
a switch (203) adapted to close a connection between the energy storage device and the position detecting device (201).

6. Measuring device (107) according to any one of the preceding claims,
wherein the second sensor device (208) comprises an acceleration sensor, a position determining device by means of mobile radio signals, a compass and/or a current meter.

7. Use of a measuring device (107) according to any one of claims 1 to 6 for level measurement.

8. Use of a measuring device (107) according to any one of claims 1 to 6 for pressure measurement.

9. Use of a measuring device (107) according to any one of claims 1 to 6 for flow measurement.

10. Use of a measuring device (107) according to any one of claims 1 to 6 for measuring a process variable in a mobile container.

11. A method for determining the position of a measuring device, comprising the steps:
sensing a process variable;
capturing environmental data from the measuring device;
analyzing the environmental data;
determining whether or not, based on the analysis, to detect a current position of the measuring device;
detecting the current position of the measuring device when the analysis of the environmental data has determined that the current position should be detected;
**characterized in that** the current position of the measuring device is detected only when the analysis of the environmental data has determined that the measuring device has been moved and is now stationary.

12. A program element which, when executed on a control device (206) of a measuring device (107), instructs the measuring device to perform the steps of claim 11.

13. A computer-readable medium on which is stored a program element according to claim 12.

## Revendications

1. Appareil de mesure (107) pour l'automatisation de processus dans un environnement industriel, présentant :
un premier dispositif de détection (209), conçu pour acquérir une grandeur de processus ;
un dispositif d'acquisition de position (201), conçu pour acquérir la position de l'appareil de mesure ;
un deuxième dispositif de détection (208), conçu pour acquérir des données d'environnement ;
un dispositif de commande (206), conçu pour analyser les données d'environnement et pour déterminer, sur la base de l'analyse, si une position actuelle de l'appareil de mesure doit être acquise ou non ;
dans lequel le dispositif de commande est en outre conçu pour ordonner au dispositif d'acquisition de position d'acquérir la position actuelle de l'appareil de mesure si l'analyse des données d'environnement a déterminé que la position actuelle doit être acquise ;
**caractérisé en ce que**
le dispositif de commande (206) est conçu pour ordonner au dispositif d'acquisition de position (201) d'acquérir la position actuelle de l'appareil de mesure uniquement lorsque l'analyse des données d'environnement a révélé que l'appareil de mesure a été déplacé et est maintenant immobile.

2. Appareil de mesure (107) selon la revendication 1,
dans lequel le dispositif d'acquisition de position (201) est conçu pour acquérir la position actuelle de l'appareil de mesure uniquement lorsque l'analyse des données d'environnement a révélé que la position actuelle doit être acquise.

3. Appareil de mesure (107) selon l'une des revendications précédentes, présentant en outre une mémoire de données (210) conçue pour stocker la position actuelle de l'appareil de mesure.

4. Appareil de mesure (107) selon l'une des revendications précédentes,
dans lequel le dispositif de commande (206) est conçu pour reconnaître un motif de déplacement de l'appareil de mesure à partir de l'analyse des données d'environnement.

5. Appareil de mesure (107) selon l'une des revendications précédentes, présentant en outre :
un accumulateur d'énergie (204),
un commutateur (203) conçu pour fermer une liaison entre l'accumulateur d'énergie et le dispositif d'acquisition de position (201).

6. Appareil de mesure (107) selon l'une des revendications précédentes,
dans lequel le deuxième dispositif de détection (208) comprend un capteur d'accélération, un dispositif de détermination de position au moyen de signaux de téléphonie mobile, une boussole et/ou un ampèremètre.

7. Utilisation d'un appareil de mesure (107) selon l'une des revendications 1 à 6 pour la mesure de niveau de remplissage.

8. Utilisation d'un appareil de mesure (107) selon l'une des revendications 1 à 6 pour la mesure de pression.

9. Utilisation d'un appareil de mesure (107) selon l'une des revendications 1 à 6 pour la mesure de débit.

10. Utilisation d'un appareil de mesure (107) selon l'une des revendications 1 à 6 pour la mesure d'une grandeur de processus dans un récipient mobile.

11. Procédé de détermination de position d'un appareil de mesure, présentant les étapes suivantes :
acquisition d'une grandeur de processus ;
acquisition de données d'environnement de l'appareil de mesure ;
analyse des données d'environnement ;
détermination, sur la base de l'analyse, du fait qu'une position actuelle du dispositif de mesure doit être acquise ou non ;
acquisition de la position actuelle de l'appareil de mesure lorsque l'analyse des données d'environnement a révélé que la position actuelle doit être acquise ;
**caractérisé en ce que**
la position actuelle de l'appareil de mesure est acquise uniquement lorsque l'analyse des données d'environnement a révélé que l'appareil de mesure a été déplacé et est maintenant immobile.

12. Élément de programme qui, lorsqu'il est exécuté sur un dispositif de commande (206) d'un appareil de mesure (107), ordonne à l'appareil de mesure de mettre en œuvre les étapes selon la revendication 11.

13. Support lisible par ordinateur sur lequel est stocké un élément de programme selon la revendication 12.
